# EUROPÄISCHE PATENTSCHRIFT

(11) **EP 4 502 544 B1**
(45) Veröffentlichungstag und Bekanntmachung des Hinweises auf die Patenterteilung: **05.11.2025**
(21) Anmeldenummer: 24180413.7
(22) Anmeldetag: 06.06.2024
(51) Int. Cl.: G01D 5/245, G01D 5/347, G01D 5/38

(54) **OPTISCHE POSITIONSMESSEINRICHTUNG**
OPTICAL POSITION MEASURING DEVICE
DISPOSITIF OPTIQUE DE MESURE DE POSITION

(30) Priorität: 31.07.2023 DE 102023207288
(43) Veröffentlichungstag der Anmeldung: 05.02.2025
(73) Patentinhaber: Dr. Johannes Heidenhain GmbH, 83301 Traunreut (DE)
(72) Erfinder: HERMANN, Michael, 83342 Tacherting (DE); KUGLER, Michael, 83308 Trostberg (DE)

(56) Entgegenhaltungen:
- EP-B1- 3 527 951
- DE-A1- 102006 021 484
- DE-A1- 102007 035 345
- DE-A1- 19 748 802

## Beschreibung

### GEBIET DER TECHNIK

Die vorliegende Erfindung betrifft eine optische Positionsmesseinrichtung, die zur hochgenauen Bestimmung der Relativposition zweier zueinander beweglicher Objekte geeignet ist.

### STAND DER TECHNIK

Aus der DE 10 2004 006 067 A1 ist eine Positionsmesseinrichtung bekannt, die zur Bestimmung der Relativposition von zwei Objekten geeignet ist, welche entlang mindestens zweier Messrichtungen relativ zueinander beweglich sind. Hierzu umfasst die Positionsmesseinrichtung mehrere Abtasteinheiten, die mit einem der beiden Objekte verbunden sind und jeweils mindestens eine Lichtquelle, ein oder mehrere Gitter sowie eine Detektoranordnung aufweisen. Ferner weist die Positionsmesseinrichtung eine Maßverkörperung auf, die mit dem anderen Objekt verbunden ist. Die Maßverkörperung umfasst eine Messteilung in Form eines zweidimensionalen Kreuzgitters, das aus zwei überlagerten, periodischen Inkrementalteilungen besteht, welche sich entlang der beiden Messrichtungen erstrecken. In das Kreuzgitter sind zwei Referenzmarken integriert, aus deren Abtastung jeweils ein Referenzsignal an einer definierten Referenzposition entlang jeder Messrichtung erzeugbar ist. Die Verwendung von Referenzmarken, die in das Kreuzgitter integriert sind, ermöglicht dabei eine Referenzsignal-Erzeugung entlang einer ersten Messrichtung unabhängig von der Position der Abtasteinheit(en) entlang einer zweiten Messrichtung und umgekehrt.

Eine optische Positionsmesseinrichtung mit Referenzmarken, die in mehreren Messteilungen integriert sind, ist auch aus der EP 3 527 951 B1 bekannt. Die hier vorgesehenen Referenzmarken umfassen aperiodische und periodische Teilbereiche. Die periodischen Teilbereiche sind hierbei identisch zur umgebenden Messteilung ausgebildet; die aperiodischen Teilbereiche bestehen aus gechirpten Gitterstrukturen, die jeweils symmetrisch zu einer zentralen Symmetrieachse angeordnet sind.

Im Hinblick auf die Erzeugung der Referenzsignale weisen die bekannten Lösungen mit in den Messteilungen integrierten Referenzmarken jedoch bestimmte Probleme auf. So sinken beim Überfahren der jeweiligen Referenzmarken durch die Abtasteinheiten die Signalpegel der erzeugten Inkrementalsignale mehr oder weniger deutlich ab. Um dies zu vermeiden ist bekannt, die optische Leistung der Lichtquelle beim Überfahren der Referenzmarke zu erhöhen. Damit reduziert sich jedoch die sogenannte Regelreserve für die Lichtquelle, d.h. der Lichtquellenstrom steht dann nicht mehr in vollem Umfang zur Kompensation anderer negativer Effekte zur Verfügung, wie z.B. Alterung und/oder Verschmutzung.

### ZUSAMMENFASSUNG DER ERFINDUNG

Der vorliegenden Erfindung liegt die Aufgabe zugrunde, eine optische Positionsmesseinrichtung zur hochgenauen Positionsbestimmung entlang mindestens zweier Messrichtungen anzugeben, bei der auch beim Überfahren von in die Messteilung integrierten Referenzmarken die Erzeugung periodischer Inkrementalsignale mit möglichst geringem Signaleinbruch gewährleistet ist.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Bestimmung der Relativposition von zwei Objekten, die entlang mindestens zweier Messrichtungen relativ zueinander beweglich sind. Sie umfasst mehrere Abtasteinheiten, die mit einem der beiden Objekte verbunden sind und jeweils mindestens eine Lichtquelle, ein oder mehrere Gitter sowie eine Detektoranordnung aufweisen. Weiterhin ist eine Maßverkörperung vorgesehen, die mit dem anderen Objekt verbunden ist. Die Maßverkörperung umfasst eine zweidimensionale Messteilung, die aus periodisch entlang der beiden Messrichtungen angeordneten Strukturelementen mit unterschiedlichen optischen Eigenschaften besteht. In die Messteilung sind mehrere Referenzmarken mit periodischen und aperiodischen Teilbereichen integriert, wobei aus der Abtastung einer Referenzmarke jeweils ein Referenzsignal an einer definierten Referenzposition entlang einer Messrichtung erzeugbar ist. Zumindest die periodischen Teilbereiche der Referenzmarken weisen eine höhere Abtasteffizienz auf als die umgebende Messteilung.

Es ist möglich, dass in die Messteilung zwei rechteckförmige Referenzmarken in einer L-förmigen Anordnung integriert sind, wobei eine Referenzmarke einer ersten Messrichtung zugeordnet ist und eine weitere Referenzmarke einer zweiten Messrichtung zugeordnet ist, die orthogonal zur ersten Messrichtung orientiert ist.

Alternativ kann vorgesehen sein, dass in die Messteilung drei rechteckförmige Referenzmarken in einer U-förmigen Anordnung integriert sind, wobei zwei Referenzmarken einer Messrichtung zugeordnet sind und eine weitere Referenzmarke einer anderen Messrichtung zugeordnet ist, die orthogonal zur ersten Messrichtung orientiert ist.

Als vorteilhaft erweist sich, wenn die Referenzmarken jeweils in den Randbereichen der Messteilung angeordnet sind.

Dabei kann die einer Messrichtung zugeordnete Referenzmarke jeweils einen Abstand zum Rand der Messteilung aufweisen, der kleiner ist als der Abstand zweier benachbarter Abtasteinheiten entlang dieser Messrichtung.

In einer weiteren Ausführungsform kann vorgesehen sein, dass
- der ersten Messrichtung eine erste Abtasteinheit zugeordnet ist und der zweiten Messrichtung eine zweite und eine dritte Abtasteinheit zugeordnet sind,
- wobei die zweite und dritte Abtasteinheit entlang der zweiten Messrichtung keinen Versatz aufweisen.

In einer weiteren Ausführungsform kann vorgesehen sein, dass
- vier Abtasteinheiten gegenüber der Messteilung am anderen Objekt angeordnet sind,
- wobei der ersten Messrichtung eine erste und eine vierte Abtasteinheit zugeordnet sind und der zweiten Messrichtung eine zweite und eine dritte Abtasteinheit zugeordnet sind, und
- wobei die zwei einer Messrichtung zugeordneten Abtasteinheit entlang der zweiten Messrichtung keinen Versatz aufweisen.

Nach einer ersten Alternative der Erfindung ist in den periodischen Teilbereichen der Referenzmarken jeweils eine eindimensionale Inkrementalteilung angeordnet, die eine erhöhte Abtasteffizienz in Form einer höheren Beugungseffizienz gegenüber der umgebenden Messteilung aufweist.

Hierbei resultiert über die eindimensionale Inkrementalteilung in den periodischen Teilbereichen der Referenzmarken lediglich eine Beugung in +/-1. Beugungsordnungen entlang einer Messrichtung, während in der umgebenden Messteilung eine Beugung in +/- 1. Beugungsordnungen entlang zweier Messrichtungen resultiert.

Vorzugsweise ist dabei die Inkrementalteilung in den periodischen Teilbereichen der Referenzmarken als auch die umgebende Messteilung jeweils als Reflexions-Phasengitter ausgebildet.

Nach einer zweiten Alternative der Erfindung kann auch vorgesehen sein, dass die periodischen Teilbereiche und die aperiodischen Teilbereiche der Referenzmarken eine erhöhte Abtasteffizienz in Form einer höheren Reflektivität gegenüber der umgebenden Messteilung aufweisen.

Hierbei ist in den periodischen Teilbereichen der Referenzmarken ein Kreuzgitter angeordnet, das wie die umgebende Messteilung als Reflexions-Phasengitter ausgebildet ist, wobei die periodischen Teilbereiche als auch die aperiodischen Teilbereiche der Referenzmarken mit einer reflexerhöhenden Beschichtung versehen sind.

Weiterhin ist möglich, dass die aperiodischen Teilbereiche der Referenzmarken jeweils gechirpte Gitterstrukturen aufweisen, in denen sich bezüglich einer zentralen Symmetrieachse die Gitterperioden örtlich symmetrisch verändern.

Mit Vorteil kann weiterhin vorgesehen sein, dass die periodischen Teilbereiche der Referenzmarken und die aperiodischen Teilbereiche der Referenzmarken senkrecht zu einer Messrichtung periodisch angeordnet sind.

Es ist ferner möglich, dass die periodischen Teilbereiche und die aperiodischen Teilbereiche der Referenzmarken ein von 1:1 abweichendes Flächenverhältnis zueinander aufweisen.

In einer möglichen Ausführungsform kann desweiteren vorgesehen sein, dass in den periodischen Teilbereichen der Referenzmarken ein- oder zweidimensionale, periodische Gitterstrukturen angeordnet sind, deren Periodizitäten entlang einer oder zweier Messrichtungen den Periodizitäten der umgebenden Messteilung entlang der ein oder zwei Messrichtungen entsprechen.

Als besonders vorteilhaft erweist sich bei der erfindungsgemäßen optischen Positionsmesseinrichtung, dass auch beim Überfahren der in die Messteilung integrierten Referenzmarken kein signifikanter Einbruch des Signalpegels der periodischen Inkrementalsignale mehr resultiert. Dadurch ist keine Erhöhung des Lichtquellenstroms mehr erforderlich, die Regelreserve steht in vollem Umfang zur Kompensation von z.B. Alterungs- oder Verschmutzungseffekten zur Verfügung.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1: eine stark schematisierte Draufsicht auf ein erstes Ausführungsbeispiel der erfindungsgemäßen optischen Positionsmesseinrichtung mit einer als zweidimensionales Kreuzgitter ausgebildeten Messteilung mit drei darin integrierten Referenzmarken und vier Abtasteinheiten;
- Figur 2: eine Draufsicht auf einen Teilbereich der Referenzmarke des Ausführungsbeispiels aus Figur 1;
- Figur 3a: eine schematisierte Schnittansicht mit dem Abtaststrahlengang einer Abtasteinheit der erfindungsgemäßen optischen Positionsmesseinrichtung;
- Figur 3b: eine Draufsicht auf die Abtasteinheit aus Figur 3a;
- Figur 4: eine stark schematisierte Draufsicht auf ein weiteres Ausführungsbeispiel der erfindungsgemäßen optischen Positionsmesseinrichtung mit einer als zweidimensionales Kreuzgitter ausgebildeten Messteilung mit zwei darin integrierten Referenzmarken und drei Abtasteinheiten;
- Figur 5: eine Draufsicht auf einen Teilbereich der Referenzmarke eines weiteren Ausführungsbeispiels der erfindungsgemäßen optischen Positionsmesseinrichtung;
- Figur 6a, 6b: jeweils eine Schnittansicht der Messteilung im Bereich der Referenzmarke aus dem Ausführungsbeispiel gemäß Figur 5.

### BESCHREIBUNG DER AUSFÜHRUNGSFORMEN

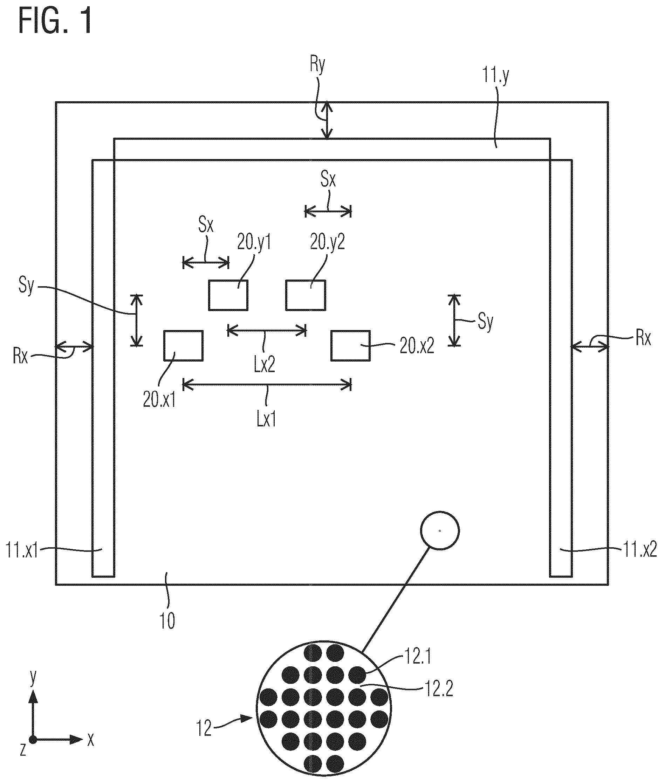

Anhand der Figuren 1, 2 sowie 3a und 3b sei im Folgenden ein Ausführungsbeispiel der erfindungsgemäßen optischen Positionsmesseinrichtung beschrieben.

Die in Figur 1 dargestellte Positionsmesseinrichtung dient zur Bestimmung der Relativposition von zwei - nicht in der Figur gezeigten - Objekten, die entlang der beiden Messrichtungen x, y zueinander beweglich sind; die beiden Messrichtungen x, y sind vorliegend orthogonal zueinander orientiert.

Nachfolgend wird die Messrichtung x auch als erste Messrichtung bezeichnet, die Messrichtung y als zweite Messrichtung. Bei den Objekten kann es sich um relativ zueinander bewegliche Maschinenkomponenten handeln, beispielsweise um den Tisch und das Werkzeug einer Halbleiter-Bearbeitungsmaschine.

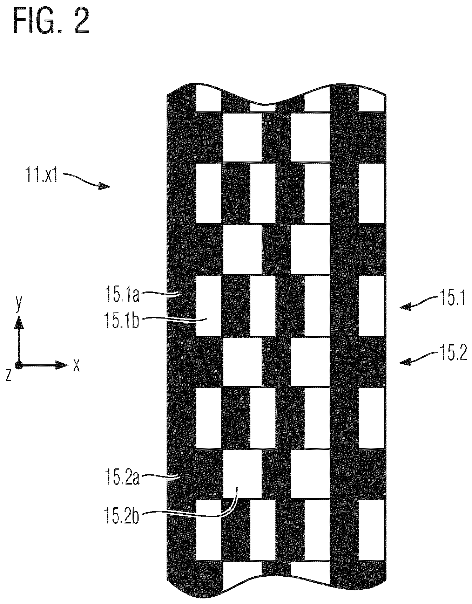

Mit einem der beiden Objekte ist dabei eine Maßverkörperung 10 der Positionsmesseinrichtung verbunden, die eine zweidimensionale reflektive Messteilung 12 auf einem Maßstabträger aufweist. Die zweidimensionale Messteilung 12 ist vorliegend als sogenanntes Kreuzgitter ausgebildet und besteht aus periodisch entlang der beiden Messrichtungen x, y angeordneten Strukturelementen 12.1, 12.2 mit unterschiedlichen optischen Eigenschaften; diesbezüglich sei insbesondere auf die vergrößerte schematisierte Darstellung eines Teils der Messteilung 12 im unteren Bereich von Figur 1 verwiesen. Im dargestellten Auflicht-System ist die Messteilung 12 als Reflexions-Phasengitter ausgebildet, bei dem die Strukturelemente 12.1, 12.2 unterschiedliche phasenschiebende Wirkungen auf die reflektierten Strahlenbündel ausüben. In einer konkreten Ausführungsform kann ein Chrom-Stufengitter mit einem Phasenhub von 180° und einer Periodizität von 8µm entlang der beiden Messrichtungen x, y als Reflexions-Phasengitter fungieren. Über die optische Abtastung der Messteilung 12 werden entlang der beiden Messrichtungen x, y periodische Inkrementalsignale erzeugt, die jeweils ein Maß für die Relativbewegung der beiden Objekte entlang der entsprechenden Messrichtung x, y darstellen. In die Messteilung 12 integriert sind mehrere Referenzmarken 11.x1, 11.x2, 11.y, wobei vorliegend drei rechteckförmige Referenzmarken 11.x1, 11.x2, 11.y in einer U-förmigen Anordnung vorgesehen sind, d.h. die drei Referenzmarken 11.x1, 11.x2, 11.y sind parallel zu drei Rändern in den Randbereichen der Messteilung 12 angeordnet. Aus der optischen Abtastung der Referenzmarken 11.x1, 11.x2, 11.y wird jeweils ein Referenzsignal an einer definierten Referenzposition entlang einer der beiden Messrichtungen x, y erzeugt. Über die Verrechnung der Referenzsignale mit den Inkrementalsignalen lässt sich in bekannter Art und Weise entlang der beiden Messrichtungen x, y eine hochauflösende Absolutpositions-Information generieren. Die konkrete Ausbildung der Referenzmarken 11.x1, 11.x2, 11.y mit periodischen und aperiodischen Teilbereichen in einer bestimmten Anordnung wird nachfolgend anhand von Figur 2 im Detail erläutert. Die von der erfindungsgemäßen optischen Positionsmesseinrichtung erzeugten Positionssignale in Form von periodischen Inkrementalsignalen und Referenzsignalen werden von einer nachgeordneten - nicht in den Figuren dargestellten - Steuereinheit weiterverarbeitet, die damit die Relativbewegung der entsprechenden Maschinenteile steuert.

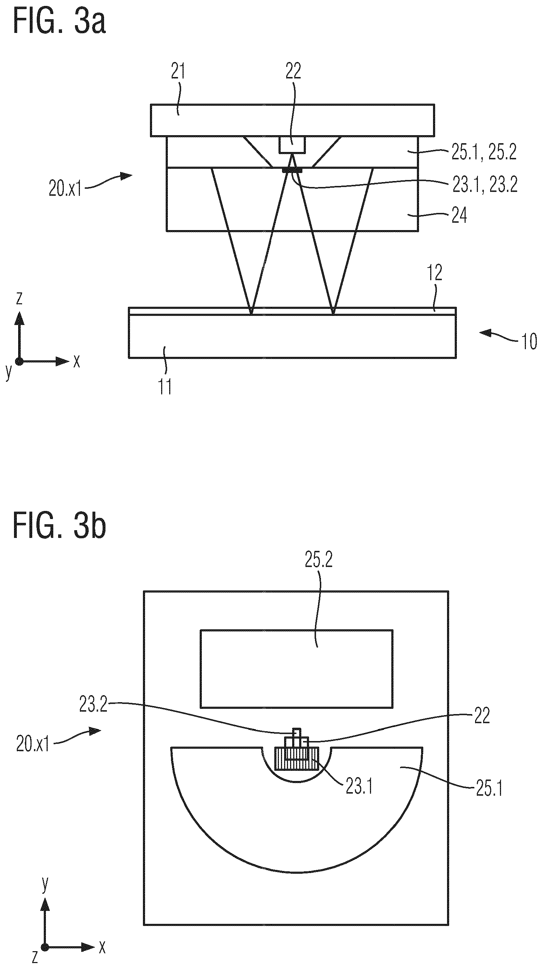

Mit dem anderen der beiden Objekte sind mehrere Abtasteinheiten 20.x1, 20.x2, 20.y1, 20.y2 der erfindungsgemäßen optischen Positionsmesseinrichtung verbunden, wobei in diesem Beispiel insgesamt vier Abtasteinheiten 20.x1, 20.x2, 20.y1, 20.y2 vorgesehen sind. Die Abtasteinheiten 20.x1, 20.x2, 20.y1, 20.y2 umfassen jeweils mindestens eine Lichtquelle, ein oder mehrere Gitter sowie eine Detektoranordnung. Mit Hilfe der Abtasteinheiten 20.x1, 20.x2, 20.y1, 20.y2 wird die Messteilung 12 optisch abgetastet und die Inkremental- und Referenzsignale entlang der beiden Messrichtungen x, y erzeugt. In Bezug auf die konkrete Ausbildung der Abtasteinheiten 20.x1, 20.x2, 20.y1, 20.y2 sei auf die noch folgende Beschreibung der Figuren 3a und 3b verwiesen.

Die verschiedenen Abtasteinheiten 20.x1, 20.x2, 20.y1, 20.y2 sind in der erfindungsgemäßen optischen Positionsmesseinrichtung relativ zueinander in einer bestimmten Art und Weise angeordnet, die für das dargestellte Beispiel nachfolgend erläutert wird. Hierbei werden die vier vorgesehenen Abtasteinheiten 20.x1, 20.y1, 20.y2, 20.x2 von links beginnend als erste, zweite, dritte und vierte Abtasteinheit 20.x1, 20.y1, 20.y2, 20.x2 bezeichnet.

Der ersten Messrichtung x ist vorliegend die erste Abtasteinheit 20.x1 sowie die vierte Abtasteinheit 20.x2 zugeordnet, wobei diese beiden Abtasteinheiten 20.x1, 20.x2 entlang der ersten Messrichtung x einen Abstand Lx1 zueinander besitzen und entlang der zweiten Messrichtung y keinen Versatz zueinander aufweisen bzw. entlang der zweiten Messrichtung y auf gleicher Höhe angeordnet sind.

Der zweiten Messrichtung y sind die zweite Abtasteinheit 20.y1 sowie die dritte Abtasteinheit 20.y2 zugeordnet, die entlang der ersten Messrichtung x einen Abstand Lx2 zueinander besitzen und entlang der zweiten Messrichtung y keinen Versatz zueinander aufweisen. Die zweite und dritte Abtasteinheit 20.y1, 20.y2 sind wie aus der Figur ersichtlich entlang der Messrichtung x zwischen der ersten und vierten Abtasteinheit 20.x1, 20.x2 angeordnet.

Die erste Abtasteinheit 20.x1 ist gegenüber der zweiten Abtasteinheit 20.y1 entlang der ersten Messrichtung x im Abstand Sx angeordnet und entlang der zweiten Messrichtung Sy im Abstand Sy.

Wie bereits oben erwähnt, sind im Beispiel der Figur 1 in die Messteilung 12 drei rechteckförmige Referenzmarken 11.x1, 11.x2, 11.y in einer U-förmigen Anordnung integriert. Analog zur Bezeichnung der verschiedenen Abtasteinheiten 20.x1, 20.x2, 20.y1, 20.y2 werden die drei vorgesehenen Referenzmarken 11.x1,11.y, 11.x2 von links beginnend als erste, zweite, dritte Referenzmarke 11.x1,11.y u11.x2 bezeichnet.

Die erste Referenzmarke 11.x1 sowie die dritte Referenzmarke 11.x2 sind der ersten Messrichtung x zugeordnet, wobei sich die Längsachsen dieser beiden Referenzmarken 11.x1, 11.x2 entlang der zweiten Messrichtung y erstrecken. Über die erste Referenzmarke 11.x1 und die dritte Referenzmarke 11.x2 ist damit eine Referenzierung bezüglich Bewegungen entlang der ersten Messrichtung x möglich. Die zweite Referenzmarke 11.y ist der zweiten Messrichtung y zugeordnet, deren Längsachse erstreckt sich entlang der ersten Messrichtung x; mit Hilfe der zweiten Referenzmarke 11.y ist also eine Referenzierung bezüglich Bewegungen entlang der zweiten Messrichtung y möglich. Aus der Abtastung der ersten und dritten Referenzmarke 11.x1, 11.x2 ist jeweils ein Referenzsignal entlang der ersten Messrichtung x bei bestimmten Referenzpositionen erzeugbar. Über die Abtastung der zweiten Referenzmarke 11.y ist ein Referenzsignal entlang der zweiten Messrichtung y an einer vorgegebenen Referenzposition erzeugbar.

In Bezug auf die Anordnung der drei Referenzmarken 11.x1, 11.x2, 11.y in den Randbereichen der Messteilung 12 ist im dargestellten Beispiel vorgesehen, dass die einer Messrichtung x bzw. y zugeordnete Referenzmarke 11.x1, 11.x2 bzw. 11.y einen Abstand Rx bzw. Ry zum benachbarten Rand der Messteilung 12 aufweist, der kleiner ist als der Abstand Sx bzw. Sy zweier benachbarter Abtasteinheiten 20.x1, 20.y1 entlang dieser Messrichtung x, y. Das heißt, der Abstand Rx der Referenzmarken 11.x1, 11.x2 zum jeweils nächstliegenden Rand der Messteilung 12 wird jeweils kleiner gewählt als der Abstand Sx, der den Abstand der beiden benachbarten Abtasteinheiten 20.x1, 20.y1 sowie der beiden benachbarten Abtasteinheiten 20.x2, 20.y2 entlang der ersten Messrichtung x angibt. Analog hierzu wird der Abstand Ry der Referenzmarke 11.y zum benachbarten Rand der Messteilung 12 kleiner gewählt als der Abstand Sy, der den Abstand der beiden benachbarten Abtasteinheiten 20.x1, 20.y1 sowie der beiden benachbarten Abtasteinheiten 20.x2, 20.y2 entlang der zweiten Messrichtung y bezeichnet.

Über die erläuterte Anordnung von Abtasteinheiten 20.x1, 20.x2, 20.y1, 20.y2 und Referenzmarken 11.x1, 11.x2, 11.y ist im dargestellten Beispiel die Positionsbestimmung bei Verschiebungen der Objekte entlang der beiden Messrichtungen x, y sowie bei einer Rotation der Objekte um eine Achse z möglich, die senkrecht zu den beiden Messrichtungen x, y orientiert ist. Desweiteren kann eine ggf. vorliegende thermische Ausdehnung der Maßverkörperung 10 mit einer derartigen Anzahl und Anordnung von Referenzmarken 11.x1, 11.x2, 11.y und Abtasteinheiten 20.x1, 20.x2, 20.y1, 20.y2 erfasst werden.

Weitere Möglichkeiten in Bezug auf die Anzahl und Anordnung von Abtasteinheiten und Referenzmarken in der erfindungsgemäßen optischen Positionsmesseinrichtung werden im weiteren Verlauf der Beschreibung noch skizziert.

Anhand von Figur 2 wird im Folgenden die Ausbildung der Referenzmarken in der erfindungsgemäßen optischen Positionsmesseinrichtung erläutert; Figur 2 zeigt eine stark schematisierte Detail-Ansicht der ersten Referenzmarke 11.x1 aus Figur 1. Dargestellt sind in der Figur dabei lediglich Details der vorgesehenen Struktur in einem kleinen Bereich entlang der Längsausdehnungsrichtung y der Referenzmarke 11.x1. Figur 2 ist keine maßstäblich korrekte Darstellung der Referenzmarke 11.x1, sondern dient lediglich zur Erläuterung der prinzipiellen Ausbildung der Referenzmarke 11.x1.

Wie bereits oben angedeutet, bestehen die Referenzmarken der erfindungsgemäßen Vorrichtung aus periodischen Teilbereichen 15.1 sowie aperiodischen Teilbereichen 15.2. Die verschiedenen Teilbereiche 15.1, 15.2 der Referenzmarken sind wie die umgebende Messteilung als Reflexions-Phasengitter ausgebildet und weisen gemäß der Draufsicht in Figur 2 jeweils eine rechteckförmige Geometrie auf. Die Rechtecks-Längsachsen der periodischen und aperiodischen Teilbereiche 15.1, 15.2 der Referenzmarke 11.x1 sind senkrecht zur Längsachse der Referenzmarke 11.x1 orientiert; d.h. die Rechtecks-Längsachsen der verschiedenen Teilbereiche 15.1, 15.2 erstrecken sich bei dieser Referenzmarke parallel zur ersten Messrichtung x, die Längsachse der Referenzmarke 11.x1 erstreckt sich parallel zur zweiten Messrichtung y. Entlang der Längsachse der Referenzmarke 11.x1, sind die Teilbereiche 15.1, 15.2 der Referenzmarke 11.x1 periodisch angeordnet, d.h. entlang der Richtung y sind alternierend periodische Teilbereiche 15.1 und aperiodische Teilbereiche 15.2 angeordnet. Innerhalb einer Referenzmarke 11.x1 weisen die periodischen Teilbereiche 15.1 und die aperiodischen Teilbereiche ein von 1:1 abweichendes Flächenverhältnis zueinander auf, d.h. die Referenzmarke 11.x1 setzt sich zu ungleichen Teilen aus periodischen und aperiodischen Anteilen zusammen; das Verhältnis der Flächen periodischer und aperiodischer Teilbereiche 15.1, 15.2 wird demzufolge abweichend zu 0.5 gewählt. Das Flächenverhältnis der periodischen und aperiodischen Teilbereiche 15.1, 15.2 kann in einer möglichen Ausführungsform dabei in einem Bereich größer oder gleich 0.25 und kleiner 0.5 gewählt werden, das heißt die periodischen Anteile nehmen einen geringeren Flächenanteil ein, als die aperiodischen Anteile. Eine derartige Wahl des Flächenverhältnisses führt zunächst zu einem vergrößerten Referenzsignal. Insbesondere im Zusammenspiel mit einer Amplitudenregelung des Inkrementalsignals wird das Referenzsignal nochmals zusätzlich verbessert, da das Hauptmaximum des Referenzsignals im Vergleich zu den Nebenmaxima des Referenzsignals verstärkt wird.

In einer bevorzugten Ausführungsform ist hierzu z.B. vorgesehen, dass die Breite der periodischen Teilbereiche 15.1 entlang der zweiten Messrichtung y 18µm und die Breite der aperiodischen Teilbereiche 15.2 entlang der zweiten Messrichtung y 22µm beträgt. Im Fall einer derartigen Dimensionierung resultiert in der Referenzmarke 11.x1 ein Verhältnis der Flächen periodischer und aperiodischer Teilbereiche 15.1, 15.2 von 0.45.

Eine derartige, im Vergleich zum signal-beitragenden Bereich der Messteilung kleine Referenzmarken-Periodizität von 40 µm erweist sich insbesondere dann als vorteilhaft, wenn die Referenzmarke schräg von den Abtasteinheiten überfahren wird; besonders geeignet sind Referenzmarken-Periodizitäten kleiner gleich 128µm, insbesondere kleiner gleich 64µm. Dadurch fällt die Variation der an der Signalbildung beteiligten Teilflächen von aperiodischen und periodischen Teilbereichen bei Überfahrt gering aus. Dies führt zu einem verbesserten Störabstand der Referenzsignale und zu einer verbesserten Amplitudenvariation der Inkrementalsignale. Auch wenn die Abtasteinheit bei gerader Überfahrt in unterschiedlichen y-Positionen in den Referenzmarkenbereich einfahren kann, wie es bei 2D-Messsystemen der Fall ist, kommen diese Vorteile zum Tragen.

Identisch zur ersten Referenzmarke 11.x1 sind grundsätzlich auch die zweite und dritte Referenzmarke 11.y, 11.x2 in Figur 1 ausgebildet, wobei sich die zweite Referenzmarke 11.y um 90° verdreht entlang der ersten Messrichtung x erstreckt.

Die aperiodischen Teilbereiche 15.2 der Referenzmarke 11.x1 weisen jeweils sogenannte gechirpte Gitterstrukturen auf. Dies bedeutet, dass die Strukturelemente 15.2a, 15.2b mit unterschiedlichen optischen Eigenschaften nicht streng periodisch entlang der jeweiligen Rechtecks-Längsachse angeordnet sind, sondern mit sich örtlich verändernden Gitterperioden im jeweiligen Teilbereich 15.2 angeordnet sind. Konkret ist im vorliegenden Beispiel vorgesehen, dass sich die Gitterperioden bezüglich einer zentralen Symmetrieachse des Teilbereichs 15.2 örtlich symmetrisch verändern, wobei ausgehend von der Symmetrieachse nach außen hin eine Vergrößerung der Gitterperioden vorgesehen ist.

Maßgeblich für die gewünschten Eigenschaften der in die Messteilung integrierten Referenzmarken 11.1x ist die Ausbildung der periodischen Teilbereiche 15.1 der Referenzmarken 11.x1. Diesbezüglich ist vorgesehen, dass zumindest diese Teilbereiche 15.1 eine höhere Abtasteffizienz als die umgebende Messteilung aufweisen. Derart kann sichergestellt werden, dass kein signifikanter Einbruch der Inkrementalsignal-Pegel beim Überfahren einer Referenzmarke 11.x1 resultiert und demzufolge keine Erhöhung des Lichtquellenstroms erforderlich wird.

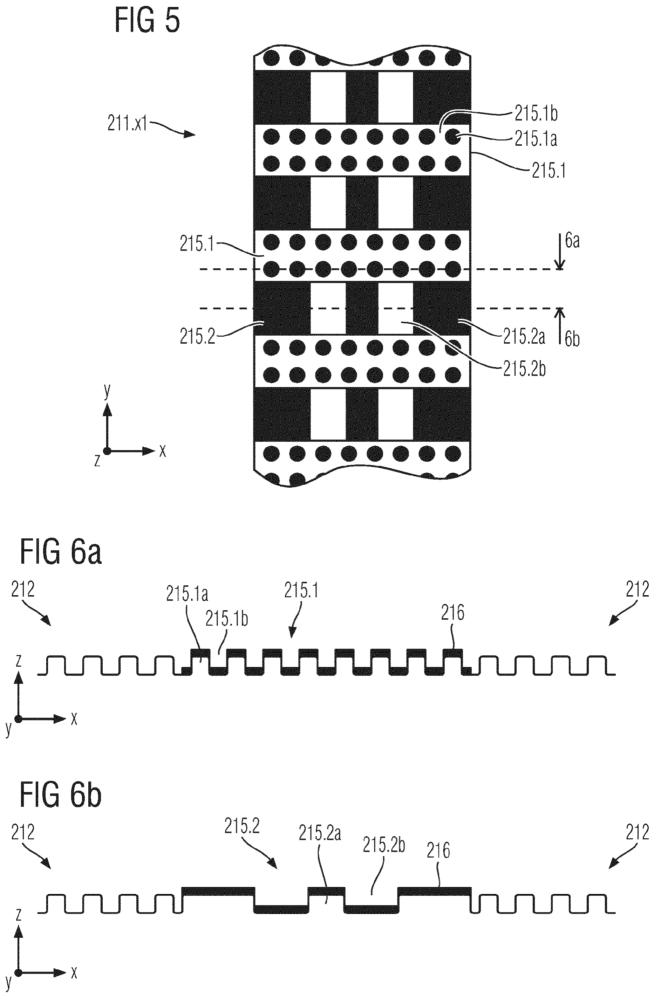

Um eine höhere Abtasteffizienz der periodischen Teilbereiche der Referenzmarken zu gewährleisten, gibt es nunmehr verschiedene Möglichkeiten; eine erste Variante wird anhand des Beispiels in Figur 2 erläutert, eine weitere Möglichkeit wird im Verlauf der weiteren Beschreibung mit Hilfe der Figuren 5, 6a, 6b beschrieben. Im Beispiel der Figur 2 ist vorgesehen, dass in den periodischen Teilbereichen 15.1 der Referenzmarke 11.x1 eine eindimensionale Inkrementalteilung angeordnet ist, die eine höhere Beugungseffizienz als die umgebende zweidimensionale Messteilung aufweist. Die eindimensionale Inkrementalteilung in den periodischen Teilbereichen 15.1 besteht wie aus Figur 2 ersichtlich aus einer periodischen Anordnung von Strukturelementen 15.1a, 15.2b mit unterschiedlichen optischen Eigenschaften entlang der ersten Messrichtung x; die Periodizität dieser Inkrementalteilung ist dabei identisch zur Periodizität des Kreuzgitters entlang der Messrichtung x gewählt. Die unterschiedlichen Strukturelemente 15.1a, 15.1b üben unterschiedliche phasenschiebende Wirkungen auf die reflektierten Strahlenbündel auf. In einer möglichen Ausführungsform kann die Inkrementalteilung z.B. als Chrom-Stufengitter ausgeführt sein und einen Phasenhub von 180° besitzen.

Über die eindimensionale Inkrementalteilung in den periodischen Teilbereichen 15.1 der Referenzmarke 11.x1 resultiert im Wesentlichen eine Beugung in die +/- 1. Beugungsordnungen entlang der Messrichtung x, d.h. die einfallende Intensität verteilt sich in Reflexion hauptsächlich auf diese beiden Beugungsordnungen. Würde demgegenüber in den periodischen Teilbereichen der Referenzmarke eine zweidimensionale Messteilung angeordnet, so hätte dies eine Beugung in die +/- 1. Beugungsordnungen entlang der beiden Messrichtungen x, y zur Folge, d.h. es würde eine Verteilung der einfallenden Strahlintensität auf vier reflektierte Beugungsordnungen resultieren. Ein deutlicher Einbruch des Inkrementalsignals wäre beim Überfahren der Referenzmarke 11.x1 die unerwünschte Folge.

Anhand der Figuren 3a und 3b wird nachfolgend der Abtaststrahlengang in der erfindungsgemäßen optischen Positionsmesseinrichtung erläutert. Dies erfolgt anhand der in Figur 3a gezeigten Schnittansicht des Abtaststrahlengangs für die erste Abtasteinheit 20.x1 aus Figur 1 in der xz-Ebene sowie einer Draufsicht auf die Detektionsebene dieser Abtasteinheit 20.x1. Prinzipiell identisch mit diesem Abtaststrahlengang ist der Abtaststrahlengang bzw. Aufbau der vierten Abtasteinheit 20.x2 aus Figur 1. Um 90° um die z-Achse verdreht verläuft der Abtaststrahlengang der zweiten und dritten Abtasteinheit 20.y1, 20.y2, über die die Bewegung entlang der zweiten Messrichtung y erfasst wird.

In der dargestellten Abtasteinheit 20.x1 der Positionsmesseinrichtung sind auf einem Trägerelement 21 eine Lichtquelle 22 sowie benachbart hierzu eine Detektoranordnung mit einem Inkrementalsignal-Detektor 25.1 sowie einem Referenzsignal-Detektor 25.2 vorgesehen. Der divergent abstrahlenden Lichtquelle 22 ist in Lichtausbreitungsrichtung eine Sendegitter-Anordnung vorgeordnet, die ein periodisches Transmissions-Sendegitter 23.1 sowie einen benachbart hierzu angeordneten Sendespalt 23.2 umfasst.

Aus der Wechselwirkung der von der Lichtquelle 22 emittierten Lichtstrahlen mit den im Abtaststrahlengang vorgesehenen Gittern, d.h. mit dem Transmissions-Sendegitter 23.1, dem Sendespalt 23.2 und der Messteilung 12, resultiert in einer Detektionsebene der Detektoranordnung ein verschiebungsabhängiges Signalmuster. Über die optoelektronische Abtastung dieses Signalmusters mit Hilfe der Abtasteinheit 20.x1 werden periodische Inkrementalsignale sowie Referenzsignale entlang der ersten Messrichtung x erzeugt.

Weiterhin erkennbar in Figur 3a ist der Aufbau der Maßverkörperung 10 mit der auf einem Maßstabträger 11 angeordneten zweidimensionalen Messteilung 12.

Anhand der weiteren Figuren werden nachfolgend alternative Varianten der erfindungsgemäßen optischen Positionsmesseinrichtung erläutert. Hierbei wird i.w. nur auf die maßgeblichen Unterschiede zum vorstehend beschriebenen Ausführungsbeispiel eingegangen.

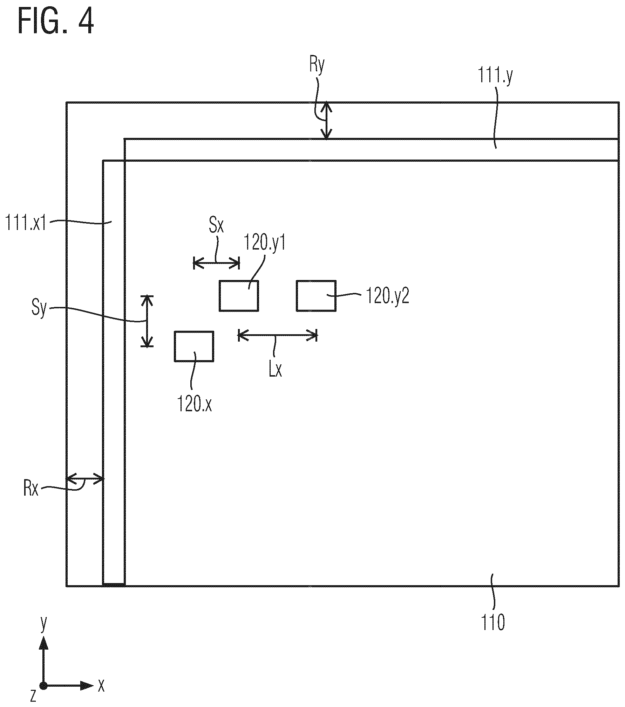

So zeigt Figur 4 eine Draufsicht auf eine Variante, bei der in die Messteilung lediglich zwei Referenzmarken 111.x, 111.y in einer L-förmigen Anordnung integriert sind; die Anordnung der beiden Referenzmarken 111.x, 111.y erfolgt wie im vorherigen Ausführungsbeispiel in den Randbereichen der Messteilung mit den Abständen Rx bzw. Ry zu den Rändern.

Abtastseitig vorgesehen sind hier drei Abtasteinheiten 120.x, 120.y1, 120.y2; der ersten Messrichtung x ist dabei eine erste Abtasteinheit 120.x zugeordnet, der zweiten Messrichtung y sind eine zweite Abtasteinheit 120.y1 und eine dritte Abtasteinheit 120.y2 zugeordnet. Die zweite und dritte Abtasteinheit 120.y1, 120.y2 weisen wie aus der Figur ersichtlich entlang der zweiten Messrichtung y keinen Versatz auf, sind aber jeweils gegenüber der ersten Abtasteinheit 120.x um den Abstand Sy entlang der zweiten Messrichtung y versetzt angeordnet. Entlang der ersten Messrichtung x ist die zweite Abtasteinheit 120.y1 um den Abstand Sx versetzt angeordnet; der Abstand zwischen der zweiten und der dritten Abtasteinheit 120.y1, 120.y2 entlang der ersten Messrichtung x wird in der Figur mit Lx bezeichnet.

Über diese Variante der erfindungsgemäßen optischen Positionsmesseinrichtung sind Relativbewegungen entlang der ersten Messrichtung x und entlang der zweiten Messrichtung y sowie eine Rotation um die Messrichtung z erfassbar. Identisch zum ersten Ausführungsbeispiel sind sowohl die in die zweidimensionale Messteilung integrierten Referenzmarken 111.x, 111.y als auch die drei Abtasteinheiten 120.x, 120.y1, 120.y2 ausgebildet.

Anhand der Figuren 5 sowie 6a, 6b wird wie bereits oben angedeutet eine alternative Möglichkeit erläutert, wie in den Teilbereichen der Referenzmarken eine erhöhte Abtasteffizienz realisiert werden kann. Figur 5 zeigt analog zu Figur 2 eine schematisierte Detailansicht einer entsprechenden Referenzmarke 211.x1, die Figuren 6a, 6b zeigen jeweils Schnittansichten der Messteilung im Bereich der Referenzmarke 211.x1.

Zur Erhöhung der Abtasteffizienz im Bereich der Referenzmarke 211.x1 ist hier vorgesehen, dass sowohl die periodischen Teilbereiche 215.1 als auch die aperiodischen Teilbereiche 215.2 der Referenzmarke 211.x1 eine höhere Reflektivität als die umgebende Messteilung 212 aufweisen. Dies erfolgt mit Hilfe einer reflexerhöhenden Beschichtung 216, die über den Gitterstrukturen des Reflexions-Phasengitters im gesamten Bereich der Referenzmarke 211.x1 aufgebracht ist, also sowohl in den periodischen Teilbereichen 215.1 als auch in den aperiodischen Teilbereichen 215.2.

Die Gitterstrukturen in den aperiodischen Teilbereichen 215.2 sind wie im Beispiel der Figur 2 als gechirpte Gitterstrukturen ausgebildet. In den periodischen Teilbereichen 215.1 der Referenzmarke 211.x1 ist im Unterschied zur Figur 2 ein Kreuzgitter angeordnet, also eine identische Gitterstruktur wie in der umgebenden Messteilung 212. Das in den periodischen Teilbereichen 215.1 angeordnete Kreuzgitter weist dabei entlang der beiden Messrichtungen x, y die gleichen Periodizitäten auf wie das Kreuzgitter der umgebenden Messteilung 212.

In einem konkreten Ausführungsbeispiel kann das Reflexions-Phasengitter im Bereich der Referenzmarke 211.x1 als Chrom-Stufengitter mit einem Phasenhub von 180° ausgebildet sein; als reflexerhöhende Beschichtung 216 fungiert eine Titan-Nitrid-Schicht.

Werden die Referenzmarken auf diese Art und Weise ausgebildet, so müssen diese in der zweidimensionalen Messteilung nicht zwingend in den Randbereichen angeordnet werden. Es wäre z.B. auch möglich zwei derartige Referenzmarken in einer gekreuzten 90°-Anordnung in der Messteilung vorzusehen, wobei der Kreuzungspunkt mit dem Zentrum der Messteilung zusammenfällt und die Referenzmarken sich parallel zur ersten und zweiten Messrichtung erstrecken.

Neben den vorstehend mit Hilfe der Figuren beschriebenen Ausführungsbeispielen existieren im Rahmen der vorliegenden Erfindung selbstverständlich noch weitere Ausgestaltungsmöglichkeiten.

So ist es möglich, im Fall einer U-förmigen Anordnung dreier Referenzmarken in der zweidimensionalen Messteilung gemäß Figur 1 abtastseitig auch nur drei Abtasteinheiten vorzusehen, also etwa auf die vierte Abtasteinheit 20.x2 in Figur 1 zu verzichten. In diesem Fall wäre dann lediglich die Erfassung der Translationsbewegungen entlang der x- und y-Richtung sowie der Rotationsbewegung um die z-Richtung möglich.

Weiterhin wäre es möglich, die Messteilung auch als Reflexions-Amplitudengitter auszubilden etc..

## Patentansprüche

1. Optische Positionsmesseinrichtung zur Bestimmung der Relativposition von zwei Objekten, die entlang mindestens zweier Messrichtungen (x, y) relativ zueinander beweglich sind, mit
- mehreren Abtasteinheiten (20.x1, 20.x2, 20.y1, 20.y2; 120.x, 120.y1, 120.y2), die mit einem der beiden Objekte verbunden sind und jeweils mindestens eine Lichtquelle (22), ein oder mehrere Gitter (23.1, 23.2) sowie eine Detektoranordnung umfassen und
- einer Maßverkörperung (10; 110), die mit dem anderen Objekt verbunden ist, mit
- einer zweidimensionalen Messteilung (12; 212), die aus periodisch entlang der beiden Messrichtungen (x, y) angeordneten Strukturelementen (12.1, 12.2) mit unterschiedlichen optischen Eigenschaften besteht, und
- mehreren in die Messteilung (12; 212) integrierten Referenzmarken (11.x1, 11.x2, 11.y; 111.x, 111.y; 211.x1) mit periodischen und aperiodischen Teilbereichen (15.1, 15.2; 215.1, 215.2), wobei aus der Abtastung einer Referenzmarke (11.x1, 11.x2, 11.y; 111.x, 111.y; 211.x1) jeweils ein Referenzsignal an einer definierten Referenzposition entlang einer Messrichtung (x, y) erzeugbar ist,
**dadurch gekennzeichnet,**
**dass** zumindest die periodischen Teilbereiche (15.1; 215.1) der Referenzmarken (11.x1, 11.x2, 11.y; 111.x, 111.y; 211.x1) eine höhere Abtasteffizienz aufweisen als die umgebende Messteilung (12, 212),
wobei die höhere Abtasteffizienz entweder in einer ersten Alternative dadurch hergestellt werden kann, dass in den periodischen Teilbereichen jeweils eine eindimensionale Inkrementalteilung angeordnet ist, die eine erhöhte Abtasteffizienz in Form einer höheren Beugungseffizienz gegenüber der umgebenden Messteilung aufweist, oder in einer zweiten Alternative dadurch, dass die periodischen und die aperiodischen Teilbereiche der Referenzmarken eine erhöhte Abtasteffizienz in Form einer höheren Reflektivität gegenüber der umgebenden Messteilung aufweisen.

2. Optische Positionsmesseinrichtung nach Anspruch 1, **dadurch gekennzeichnet, dass** in die Messteilung zwei rechteckförmige Referenzmarken (111.x, 111.y) in einer L-förmigen Anordnung integriert sind, wobei eine Referenzmarke (111.x) einer ersten Messrichtung (x) zugeordnet ist und eine weitere Referenzmarke (111.y) einer zweiten Messrichtung (y) zugeordnet ist, die orthogonal zur ersten Messrichtung (x) orientiert ist.

3. Optische Positionsmesseinrichtung nach Anspruch 1, **dadurch gekennzeichnet, dass** in die Messteilung (12) drei rechteckförmige Referenzmarken (11.x1, 11.x2, 11.y) in einer U-förmigen Anordnung integriert sind, wobei zwei Referenzmarken (11.x1, 11.x2) einer Messrichtung (x) zugeordnet sind und eine weitere Referenzmarke (11.y) einer anderen Messrichtung (y) zugeordnet ist, die orthogonal zur ersten Messrichtung (x) orientiert ist.

4. Optische Positionsmesseinrichtung nach Anspruch 2 oder 3, **dadurch gekennzeichnet, dass** die Referenzmarken (11.x1, 11.x2, 11.y) jeweils in den Randbereichen der Messteilung (12) angeordnet sind.

5. Optische Positionsmesseinrichtung nach Anspruch 4, **dadurch gekennzeichnet, dass** die einer Messrichtung (x, y) zugeordnete Referenzmarke (11.x1, 11.x2, 11.y; 111.x, 111.y) jeweils einen Abstand (Rx, Ry) zum Rand der Messteilung (12) aufweist, der kleiner ist als der Abstand (Sx, Sy) zweier benachbarter Abtasteinheiten (20.x1, 20.x2, 20.y1, 20.y2; 120.x, 120.y1, 120.y2) entlang dieser Messrichtung (x, y).

6. Optische Positionsmesseinrichtung nach Anspruch 2, **dadurch gekennzeichnet, dass**
- der ersten Messrichtung (x) eine erste Abtasteinheit (120.x) zugeordnet ist und der zweiten Messrichtung (y) eine zweite und eine dritte Abtasteinheit (120.y1, 120.y2) zugeordnet sind,
- wobei die zweite und dritte Abtasteinheit (120.y1, 120.y2) entlang der zweiten Messrichtung (y) keinen Versatz aufweisen.

7. Optische Positionsmesseinrichtung nach Anspruch 3, **dadurch gekennzeichnet, dass**
- vier Abtasteinheiten (20.x1, 20.x2, 20.y1, 20.y2) gegenüber der Messteilung (12) am anderen Objekt angeordnet sind,
- wobei der ersten Messrichtung (x) eine erste und eine vierte Abtasteinheit (20.x1, 20.x2) zugeordnet sind und der zweiten Messrichtung (y) eine zweite und eine dritte Abtasteinheit (20.y1, 20.y2) zugeordnet sind, und
- wobei die zwei einer Messrichtung zugeordneten Abtasteinheit (20.x1, 20.x2; 20.y1, 20.y2) entlang der zweiten Messrichtung (y) keinen Versatz aufweisen.

8. Optische Positionsmesseinrichtung nach der ersten Alternative von Anspruch 1, **dadurch gekennzeichnet, dass** über die eindimensionale Inkrementalteilung in den periodischen Teilbereichen (15.1) der Referenzmarken (11.x1, 11.x2, 11.y; 111.x, 111.y) lediglich eine Beugung in +/- 1. Beugungsordnungen entlang einer Messrichtung (x, y) resultiert, während in der umgebenden Messteilung (12) eine Beugung in +/- 1. Beugungsordnungen entlang zweier Messrichtungen (x, y) resultiert.

9. Optische Positionsmesseinrichtung nach Anspruch 8, **dadurch gekennzeichnet, dass** die Inkrementalteilung in den periodischen Teilbereichen (15.1) der Referenzmarken (11.x1, 11.x2, 11.y; 111.x, 111.y) als auch die umgebende Messteilung (12; 112) jeweils als Reflexions-Phasengitter ausgebildet sind.

10. Optische Positionsmesseinrichtung nach der zweiten Alternative in Anspruch 1, **dadurch gekennzeichnet, dass** in den periodischen Teilbereichen (215.1) der Referenzmarken (211.x1) ein Kreuzgitter angeordnet ist, das wie die umgebende Messteilung (212) als Reflexions-Phasengitter ausgebildet ist, wobei die periodischen Teilbereiche (215.1) als auch die aperiodischen Teilbereiche (215.2) der Referenzmarken (211.x1) mit einer reflexerhöhenden Beschichtung (216) versehen sind.

11. Optische Positionsmesseinrichtung nach mindestens einem der vorhergehenden Ansprüche, **dadurch gekennzeichnet, dass** die aperiodischen Teilbereiche (15.2; 115.2; 215.2) der Referenzmarken (11.x1, 11.x2, 11.y; 111.x, 111.y; 211.x1) jeweils gechirpte Gitterstrukturen aufweisen, in denen sich bezüglich einer zentralen Symmetrieachse die Gitterperioden örtlich symmetrisch verändern.

12. Optische Positionsmesseinrichtung nach mindestens einem der vorhergehenden Ansprüche, **dadurch gekennzeichnet, dass** die periodischen Teilbereiche (15.1; 215.1) der Referenzmarken (11.x1, 11.x2, 11.y; 111.x, 111.y; 211.x1) und die aperiodischen Teilbereiche (15.2; 215.2) der Referenzmarken (11.x1, 11.x2, 11.y; 111.x, 111.y; 211.x1) senkrecht zu einer Messrichtung (x, y) periodisch angeordnet sind.

13. Optische Positionsmesseinrichtung nach mindestens einem der vorhergehenden Ansprüche, **dadurch gekennzeichnet, dass** die periodischen Teilbereiche (15.1; 215.1) und die aperiodischen Teilbereiche (15.2; 215.2) der Referenzmarken (11.x1, 11.x2, 11.y; 111.x, 111.y; 211.x1) ein von 1:1 abweichendes Flächenverhältnis zueinander aufweisen.

14. Optische Positionsmesseinrichtung nach mindestens einem der vorhergehenden Ansprüche, **dadurch gekennzeichnet, dass** in den periodischen Teilbereichen (15.1; 215.1) der Referenzmarken (11.x1, 11.x2, 11.y; 111.x, 111.y; 211.x1) ein- oder zweidimensionale, periodische Gitterstrukturen angeordnet sind, deren Periodizitäten entlang einer oder zweier Messrichtungen (x, y) den Periodizitäten der umgebenden Messteilung (12; 212) entlang der ein oder zwei Messrichtungen (x, y) entsprechen.

## Claims

1. Optical position measuring device for determining the relative position of two objects that are movable relative to each other along at least two measuring directions (x, y), having
- multiple scanning units (20.x1, 20.x2, 20.y1, 20.y2; 120.x, 120.y1, 120.y2) that are connected to one of the two objects and each comprise at least one light source (22), one or more gratings (23.1, 23.2) and a detector arrangement and
- a material measure (10; 110) connected to the other object, having
- a two-dimensional measurement graduation (12; 212) consisting of structural elements (12.1, 12.2) with different optical properties that are arranged periodically in the two measuring directions (x, y), and
- a plurality of reference marks (11.x1, 11.x2, 11.y; 111.x, 111.y; 211.x1) that are integrated into the measurement graduation (12; 212) and have periodic and aperiodic portions, (15.1, 15.2; 215.1, 215.2), wherein a reference signal at a defined reference position in a measuring direction (x, y) can be generated from the scanning of a reference mark (11.x1, 11.x2, 11.y; 111.x, 111.y; 211.x1),
**characterized**
**in that** at least the periodic portions (15.1; 215.1) of the reference marks (11.x1, 11.x2, 11.y; 111.x, 111.y; 211.x1) have a higher scanning efficiency than the surrounding measurement graduation (12, 212),
wherein the higher scanning efficiency can be established either in a first alternative by virtue of the fact that a respective one-dimensional incremental graduation with an increased scanning efficiency in the form of a higher diffraction efficiency in comparison with the surrounding measurement graduation is arranged in the periodic portions or in a second alternative by virtue of the fact that the periodic and aperiodic portions of the reference marks have an increased scanning efficiency in the form of a higher reflectivity in comparison with the surrounding measurement graduation.

2. Optical position measuring device according to Claim 1, **characterized in that** two rectangular reference marks (111.x, 111.y) in an L-shaped arrangement are integrated into the measurement graduation, wherein one reference mark (111.x) is assigned to a first measuring direction (x) and a further reference mark (111.y) is assigned to a second measuring direction (y) oriented orthogonal to the first measuring direction (x).

3. Optical position measuring device according to Claim 1, **characterized in that** three rectangular reference marks (11.x1, 11.x2, 11.y) in a U-shaped arrangement are integrated into the measurement graduation (12), wherein two reference marks (11.x1, 11.x2) are assigned to a measuring direction (x) and a further reference mark (11.y) is assigned to another measuring direction (y) oriented orthogonal to the first measuring direction (x).

4. Optical position measuring device according to Claim 2 or 3, **characterized in that** the reference marks (11.x1, 11.x2, 11.y) are each arranged in the edge regions of the measurement graduation (12).

5. Optical position measuring device according to Claim 4, **characterized in that** the reference mark (11.x1, 11.x2, 11.y; 111.x, 111.y) assigned to a measuring direction (x, y) in each case has a distance (Rx, Ry) from the edge of the measurement graduation (12) that is shorter than the distance (Sx, Sy) between two adjacent scanning units (20.x1, 20.x2, 20.y1, 20.y2; 120.x, 120.y1, 120.y2) in this measurement direction (x, y).

6. Optical position measuring device according to Claim 2, **characterized in that**
- a first scanning unit (120.x) is assigned to the first measuring direction (x) and a second and a third scanning unit (120.y1, 120.y2) are assigned to the second measuring direction (y),
- wherein the second and third scanning units (120.y1, 120.y2) do not have an offset in the second measuring direction (y).

7. Optical position measuring device according to Claim 3, **characterized in that**
- four scanning units (20.x1, 20.x2, 20.y1, 20.y2) are arranged on the other object opposite the measurement graduation (12),
- wherein a first and a fourth scanning unit (20.x1, 20.x2) are assigned to the first measuring direction (x) and a second and a third scanning unit (20.y1, 20.y2) are assigned to the second measuring direction (y), and
- wherein the two scanning units (20.x1, 20.x2; 20.y1, 20.y2) assigned to a measuring device do not have an offset in the second measuring direction (y).

8. Optical position measuring device according to the first alternative in Claim 1, **characterized in that** the one-dimensional incremental graduation in the periodic portions (15.1) of the reference marks (11.x1, 11.x2, 11.y; 111.x, 111.y) only results in a diffraction in the +/- 1st orders of diffraction in one measuring direction (x, y), while the surrounding measurement graduation (12) results in a diffraction in +/- 1st orders of diffraction in two measuring directions (x, y).

9. Optical position measuring device according to Claim 8, **characterized in that** each of the incremental graduation in the periodic portions (15.1) of the reference marks (11.x1, 11.x2, 11.y; 111.x, 111.y) and the surrounding measurement graduation (12; 112) is formed as a reflection phase grating.

10. Optical position measuring device according to the second alternative in Claim 1, **characterized in that** a cross grating formed like the surrounding measurement graduation (212) as a reflection phase grating is arranged in the periodic portions (215.1) of the reference marks (211.x1), wherein the periodic portions (215.1) and the aperiodic portions (215.2) of the reference marks (211.x1) are provided with a reflection-enhancing coating (216).

11. Optical position measuring device according to at least one of the preceding claims, **characterized in that** the aperiodic portions (15.2; 115.2; 215.2) of the reference marks (11.x1, 11.x2, 11.y; 111.x, 111.y; 211.x1) each have chirped grating structures in which the grating periods locally change spatially symmetrically with respect to a central axis of symmetry.

12. Optical position measuring device according to at least one of the preceding claims, **characterized in that** the periodic portions (15.1; 215.1) of the reference marks (11.x1, 11.x2, 11.y; 111.x, 111.y; 211.x1) and the aperiodic portions (15.2; 215.2) of the reference marks (11.x1, 11.x2, 11.y; 111.x, 111.y; 211.x1) are arranged periodically perpendicular to a measurement direction (x, y).

13. Optical position measuring device according to at least one of the preceding claims, **characterized in that** the periodic portions (15.1; 215.1) and the aperiodic portions (15.2; 215.2) of the reference marks (11.x1, 11.x2, 11.y; 111.x, 111.y; 211.x1) have an area ratio to each other that differs from 1:1.

14. Optical position measuring device according to at least one of the preceding claims, **characterized in that** the periodic portions (15.1; 215.1) of the reference marks (11.x1, 11.x2, 11.y; 111.x, 111.y; 211.x1) contain an arrangement of one- or two-dimensional, periodic grating structures whose periodicities in one or two measuring directions (x, y) correspond to the periodicities of the surrounding measurement graduation (12; 212) in the one or two measuring directions (x, y).

## Revendications

1. Dispositif optique de mesure de position destiné à déterminer la position relative de deux objets, qui sont mobiles l'un par rapport à l'autre le long d'au moins deux directions de mesure (x, y), comprenant
- plusieurs unités de balayage (20.x1, 20.x2, 20.y1, 20.y2 ; 120.x, 120.y1, 120.y2), qui sont reliées à l'un des deux objets et comprennent respectivement au moins une source lumineuse (22), un ou plusieurs réseaux (23.1, 23.2) ainsi qu'un agencement de détecteurs, et
- un corps de mesure étalon (10 ; 110), qui est relié à l'autre objet, comprenant
- une graduation de mesure bidimensionnelle (12 ; 212), qui se compose d'éléments structuraux (12.1, 12.2) disposés périodiquement le long des deux directions de mesure (x, y) avec des propriétés optiques différentes, et
- plusieurs marques de référence (11.x1, 11.x2, 11.y ; 111.x, 111.y ; 211.x1) intégrées dans la graduation de mesure (12 ; 212) avec des zones partielles périodiques et apériodiques (15.1, 15.2 ; 215.1, 215.2), un signal de référence pouvant être généré respectivement à une position de référence définie le long d'une direction de mesure (x, y) à partir du balayage d'une marque de référence (11.x1, 11.x2, 11.y ; 111.x, 111.y ; 211.x1), **caractérisé**
**en ce qu'**au moins les zones partielles périodiques (15.1 ; 215.1) des marques de référence (11.x1, 11.x2, 11.y ; 111.x, 111.y ; 211.x1) présentent une efficacité de balayage plus élevée que la graduation de mesure (12, 212) environnante,
l'efficacité de balayage la plus élevée pouvant être établie soit, dans une première variante, par le fait qu'une graduation incrémentale unidimensionnelle est respectivement disposée dans les zones partielles périodiques, laquelle présente une efficacité de balayage accrue sous la forme d'une efficacité de diffraction plus élevée par rapport à la graduation de mesure environnante, soit, dans une deuxième variante, par le fait que les zones partielles périodiques et apériodiques des marques de référence présentent une efficacité de balayage accrue sous la forme d'une réflectivité plus élevée par rapport à la graduation de mesure environnante.

2. Dispositif optique de mesure de position selon la revendication 1, **caractérisé en ce que** deux marques de référence rectangulaires (111.x, 111.y) sont intégrées dans la graduation de mesure selon une disposition en L, une marque de référence (111.x) étant associée à une première direction de mesure (x) et une autre marque de référence (111.y) étant associée à une deuxième direction de mesure (y) qui est orientée perpendiculairement à la première direction de mesure (x).

3. Dispositif optique de mesure de position selon la revendication 1, **caractérisé en ce que** trois marques de référence rectangulaires (11.x1, 11.x2, 11.y) sont intégrées dans la graduation de mesure (12) selon une disposition en U, deux marques de référence (11.x1, 11.x2) étant associées à une direction de mesure (x) et une autre marque de référence (11.y) étant associée à une autre direction de mesure (y) qui est orientée perpendiculairement à la première direction de mesure (x).

4. Dispositif optique de mesure de position selon la revendication 2 ou 3, **caractérisé en ce que** les marques de référence (11.x1, 11.x2, 11.y) sont respectivement disposées dans les zones de bord de la graduation de mesure (12).

5. Dispositif optique de mesure de position selon la revendication 4, **caractérisé en ce que** la marque de référence (11.x1, 11.x2, 11.y ; 111.x, 111.y) associée à une direction de mesure (x, y) présente respectivement une distance (Rx, Ry) par rapport au bord de la graduation de mesure (12) qui est inférieure à la distance (Sx, Sy) de deux unités de balayage (20.x1, 20.x2, 20.y1, 20.y2 ; 120.x, 120.y1, 120.y2) adjacentes le long de cette direction de mesure (x, y).

6. Dispositif optique de mesure de position selon la revendication 2, **caractérisé**
- **en ce qu'**une première unité de balayage (120.x) est associée à la première direction de mesure (x) et des deuxième et troisième unités de balayage (120.y1, 120.y2) sont associées à la deuxième direction de mesure (y),
- les deuxième et troisième unités de balayage (120.y1, 120.y2) ne présentent pas de décalage le long de la deuxième direction de mesure (y).

7. Dispositif optique de mesure de position selon la revendication 3, **caractérisé en ce que**
- quatre unités de balayage (20.x1, 20.x2, 20.y1, 20.y2) sont disposées sur l'autre objet par rapport à la graduation de mesure (12),
- des première et quatrième unités de balayage (20.x1, 20.x2) étant associées à la première direction de mesure (x) et des deuxième et troisième unités de balayage (20.y1, 20.y2) étant associées à la deuxième direction de mesure (y), et
- les deux unités de balayage (20.x1, 20.x2 ; 20.y1, 20.y2) associées à une direction de mesure ne présentant pas de décalage le long de la deuxième direction de mesure (y).

8. Dispositif optique de mesure de position selon la première variante de la revendication 1, **caractérisé en ce que**, par l'intermédiaire de la graduation incrémentale unidimensionnelle dans les zones partielles périodiques (15.1) des marques de référence (11.x1, 11.x2, 11.y ; 111.x, 111.y), il se produit uniquement une diffraction suivant les ordres de diffraction +/- 1 le long d'une direction de mesure (x, y), tandis que dans la graduation de mesure (12) environnante, il se produit une diffraction suivant les ordres de diffraction +/- 1 le long de deux directions de mesure (x, y).

9. Dispositif optique de mesure de position selon la revendication 8, **caractérisé en ce que** la graduation incrémentale dans les zones partielles périodiques (15.1) des marques de référence (11.x1, 11.x2, 11.y ; 111.x, 111.y) ainsi que la graduation de mesure (12 ; 112) environnante sont respectivement conçues sous forme de réseau de phase de réflexion.

10. Dispositif optique de mesure de position selon la deuxième variante de la revendication 1, **caractérisé en ce que**, dans les zones partielles périodiques (215.1) des marques de référence (211.x1), est disposé un réseau en croix qui, tout comme la graduation de mesure (212) environnante, est conçu sous forme de réseau de phase de réflexion, les zones partielles périodiques (215.1) ainsi que les zones partielles apériodiques (215.2) des marques de référence (211.x1) étant pourvues d'un revêtement augmentant la réflexion (216).

11. Dispositif optique de mesure de position selon au moins l'une des revendications précédentes, **caractérisé en ce que** les zones partielles apériodiques (15.2 ; 115.2 ; 215.2) des marques de référence (11.x1, 11.x2, 11.y ; 111.x, 111.y ; 211.x1) présentent respectivement des structures de réseau à pas variable, dans lesquelles les périodes de réseau varient localement de manière symétrique par rapport à un axe de symétrie central.

12. Dispositif optique de mesure de position selon au moins l'une des revendications précédentes, **caractérisé en ce que** les zones partielles périodiques (15.1 ; 215.1) des marques de référence (11.x1, 11.x2, 11.y ; 111.x, 111.y ; 211.x1) et les zones partielles apériodiques (15.2 ; 215.2) des marques de référence (11.x1, 11.x2, 11.y ; 111.x, 111.y ; 211.x1) sont disposées périodiquement perpendiculairement à une direction de mesure (x, y).

13. Dispositif optique de mesure de position selon au moins l'une des revendications précédentes, **caractérisé en ce que** les zones partielles périodiques (15.1 ; 215.1) et les zones partielles apériodiques (15.2 ; 215.2) des marques de référence (11.x1, 11.x2, 11.y ; 111.x, 111.y ; 211.x1) présentent entre elles un rapport de surface qui diffère de 1:1.

14. Dispositif optique de mesure de position selon au moins l'une des revendications précédentes, **caractérisé en ce que**, dans les zones partielles périodiques (15.1 ; 215.1) des marques de référence (11.x1, 11.x2, 11.y ; 111.x, 111.y ; 211.x1), sont disposées des structures de réseau périodiques unidimensionnelles ou bidimensionnelles, dont les périodicités le long d'une ou de deux directions de mesure (x, y) correspondent aux périodicités de la graduation de mesure (12 ; 212) environnante le long desdites une ou deux directions de mesure (x, y).
